# EUROPÄISCHE PATENTANMELDUNG

(11) **EP 2 394 777 A1**
(43) Veröffentlichungstag der Anmeldung: **14.12.2011**
(21) Anmeldenummer: 11164113.0
(22) Anmeldetag: 28.04.2011
(51) Int. Cl.: B23P 19/00, B65G 47/14

(54) **Vorrichtung zum Vereinzeln von Teilen**

(30) Priorität: 10.06.2010 DE 102010023322
(71) Anmelder: SIM Automation GmbH & Co. KG, 37308 Heilbad Heiligenstadt (DE)
(72) Erfinder: Elsner, Peter, 37318 Thalwenden (DE)
(74) Vertreter: Lorenz, Bernd Ingo Thaddeus

(57) **Zusammenfassung**

Die Erfindung betrifft eine Vorrichtung zum Vereinzeln von Teilen, insbesondere von Teilen, die einer Montageanlage zugeführt werden. Zum grundsätzlichen Aufbau der Vorrichtung gehören eine Teile-Zuführung (1), ein Träger (2) mit einem Aufnahmeelement (3) für ein mittels der Teile-Zuführung (1) zugeführten Teils (4), eine an den Träger (2) angeschlossenen Blasleitung (5) für die Zuführung von Blasluft zum Aufnahmeelement (3) sowie eine Förderleitung (6) für eine pneumatische Förderung eines mit Blasluft aus dem Aufnahmeelement (3) ausgetragenen Teils (4). Der Träger (2) ist zwischen einer ersten Betriebsposition, in der das Aufnahmeelement (3) an der Teile-Zuführung (1) bereitsteht, und einer zweiten Betriebsposition, in der das Aufnahmeelement (3) mit der Förderleitung (6) fluchtet, verstellbar. Erfindungsgemäß ist das Aufnahmeelement (3) in Bewegungsrichtung des im Aufnahmeelement positionierten Teils verschiebbar im Träger (2) angeordnet ist und liegt in der zweiten Betriebsposition unter der Wirkung eines an der Rückseite des Aufnahmeelements (3) pneumatisch erzeugten Drucks an einem Anschlussstück (7) der Förderleitung (6) an. - Fig. 2c

## Beschreibung

Die Erfindung betrifft eine Vorrichtung zum Vereinzeln von Teilen, insbesondere von Teilen, die einer Montageanlage zugeführt werden. Bei den Teilen handelt es sich um Kleinteile, die pneumatisch gefördert werden können, z. B. Stifte, Bolzen, Schrauben und dergleichen.

In Montageanlagen wird eine Mehrzahl von Teilen zu einer Baugruppe bzw. einem Fertigerzeugnis vereinigt. Die zu montierenden Teile müssen einzeln und in zeitlichen Abständen, die an den Arbeitstakt der Montageanlage angepasst sind, der Montageanlage zugeführt werden.

Die Erfindung befasst sich mit einer Vorrichtung, mit der Teile vereinzelt und pneumatisch einer Montageanlage oder einer sonstigen Einrichtung zur Bearbeitung oder Nutzung der Teile zugeführt werden können. Die Vorrichtung soll einfach aufgebaut sein und pneumatisch betrieben werden. Dabei sollen Luftverluste vermieden und Strömungsgeräusche soweit als möglich reduziert werden.

Gegenstand und Lösung dieser Aufgabe ist eine Vorrichtung nach Anspruch 1. Die erfindungsgemäße Vorrichtung umfasst in ihrem grundsätzlichen Aufbau eine Teile-Zuführung, einen Träger mit einem Aufnahmeelement für ein mittels der Teile-Zuführung zugeführten Teils, eine an den Träger angeschlossene Blasleitung für die Zuführung von Blasluft zum Aufnahmeelement und eine Förderleitung für eine pneumatische Förderung eines mit Blasluft aus dem Aufnahmeelement ausgetragenen Teils. Der Träger ist zwischen einer ersten Betriebsposition, in der das Aufnahmeelement an der Teile-Zuführung bereitsteht, und einer zweiten Betriebsposition, in der das Aufnahmeelement mit der Förderleitung fluchtet, verstellbar. Das Aufnahmeelement ist erfindungsgemäß in Bewegungsrichtung des im Aufnahmeelement positionierten Teils verschiebbar im Träger angeordnet und liegt in der zweiten Betriebsposition unter der Wirkung eines an der Rückseite des Aufnahmeelements pneumatisch erzeugten Drucks an einem Anschlussstück der Förderleitung an.

Die Teile-Aufnahme ist in eine Ausnehmung des Trägers schwimmend gelagert, wobei die schwimmende Lagerung lediglich einachsige Stellbewegungen zulässt. Das Aufnahmeelement schließt vorzugsweise im Wesentlichen bündig mit der Außenfläche des Trägers ab, wenn sich der Träger in der ersten Betriebsposition befindet. Nachdem der Träger in die zweite Betriebsposition bewegt worden ist, kann das Aufnahmeelement pneumatisch angehoben werden, bis es am Anschlussstück der Förderleitung anliegt. Die Stellbewegung kann durch separat zugeführte Steuerluft oder durch Zuführung von Blasluft, die auch zur Förderung der Teile benötigt wird, erfolgen. In der zweiten Betriebsposition liegt das vorstehende Ende des Aufnahmeelements an dem Anschlussstück der Förderleitung an und überbrückt einen Spalt zwischen dem Träger und dem Anschlussstück der Förderleitung. Dadurch kann das Austreten von Luft während eines sich anschließenden Blasvorganges vermieden oder zumindest stark verringert und die Blasluft zur Förderung der vereinzelten Teile optimal eingesetzt werden. Gleichzeitig bewirkt die erfindungsgemäße Ausgestaltung eine deutliche Reduzierung der Strömungsgeräusche während des Blasvorganges. Ein funktions- und toleranzbedingter Spalt zwischen einerseits dem beweglichen Träger und andererseits den stationär angeordneten Teilen der Teile-Zuführung und Förderleitung kann großzügig dimensioniert werden. Das vereinfacht die Fertigung der Bauteile und Montage-und Justagearbeiten. Auch können toleranzbedingte Längenunterschiede der zu montierenden Teile durch die schwimmende Lagerung des Aufnahmeelementes ausgeglichen werden. Die erfindungsgemäße Vorrichtung erfordert keinen zusätzlichen Antrieb, um einen Spalt zwischen dem Aufnahmeelement und dem Anschlussstück der Förderleitung zu verschließen, was sich auf die Herstellungskosten der Vorrichtung vorteilhaft auswirkt.

Das Aufnahmeelement weist vorzugsweise einen Mantel und einen rückseitigen Boden mit einer Durchlassöffnung für Blasluft auf. Der Mantel kann beispielsweise rechteckig gestaltet sein, um eine zusätzliche Verdrehsicherung zu realisieren. Auch ein zylindrischer Mantel ist denkbar. Der Mantel des Aufnahmeelementes kann ferner eine Öffnung enthalten, durch die Steuerluft zur Erzeugung einer Stellbewegung des Aufnahmeelementes zuführbar ist. Mittels der Steuerluft kann das Aufnahmeelement angehoben und mit dem Anschlussstück der Förderleitung in Kontakt gebracht werden, bevor der Blasvorgang begonnen und das in dem Aufnahmeelement positionierte Teil durch eine pneumatische Förderung aus dem Aufnahmeelement ausgetragen wird.

Der Träger ist vorzugsweise als Platte ausgebildet, die eine Ausnehmung für das Aufnahmeelement und eine an das rückwärtige Ende der Ausnehmung anschließende sowie mit der Blasleitung verbundene Bohrung für Blasluft aufweist. Der Träger kann auf einer Schlittenführung linear beweglich geführt und an eine pneumatische Stellvorrichtung angeschlossen sein.

Das Anschlussstück der Förderleitung weist zweckmäßig eine ringförmige Sitzfläche auf, an der das in der zweiten Betriebsposition des Trägers vorstehende Ende des Aufnahmeelementes dicht anliegt.

Als Teile-Zuführung eignet sich beispielsweise ein rohrförmiger Kanal, durch den eine Folge von aneinander anliegenden Teilen der Vorrichtung zuführbar ist.

Im Folgenden wird die Erfindung anhand einer lediglich ein Ausführungsbeispiel darstellenden Zeichnung erläutert. Es zeigen schematisch
- Fig.1: eine Vorrichtung zum Vereinzeln von Teilen, die beispielsweise einer Montageanlage zugeführt werden,
- Fig. 2a bis 2c: einen Längsschnitt durch die in Fig. 1 dargestellte Vorrichtung in verschiedenen Funktionsstellungen.

Die in den Figuren dargestellte Vorrichtung dient zum Vereinzeln von Teilen, die beispielsweise einer nicht dargestellten Montageanlage zugeführt werden. Bei den Teilen handelt es sich um pneumatisch förderbare Kleinteile, z. B. Stifte, Bolzen, Schrauben und dergleichen. Zum grundsätzlichen Aufbau der Vorrichtung gehören eine Teile-Zuführung 1, ein Träger 2 mit einem Aufnahmeelement 3 für ein mittels der Teile-Zuführung zugeführten Teils 4, eine an den Träger 2 angeschlossene Blasleitung 5 für die Zuführung von Blasluft zum Aufnahmeelement 3 sowie eine Förderleitung 6 für eine pneumatische Förderung eines mit Blasluft aus dem Aufnahmeelement 3 ausgetragenen Teils 4.

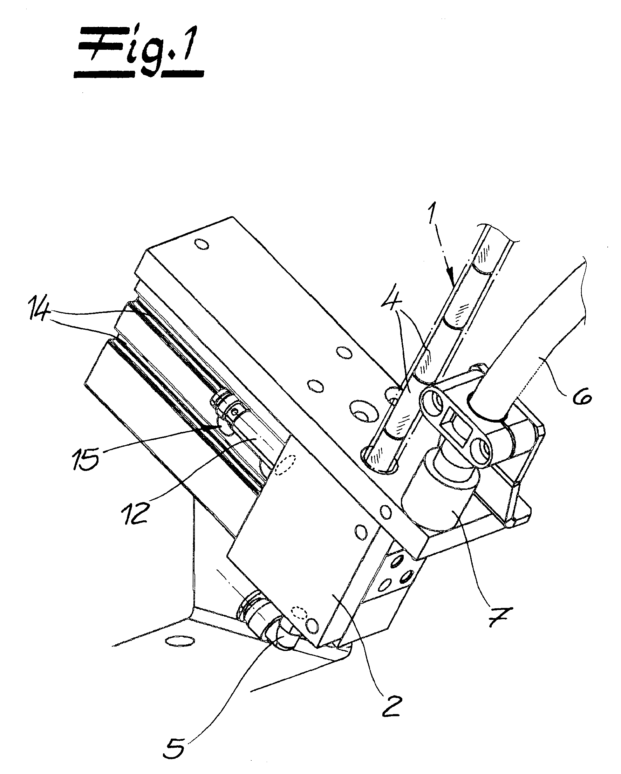

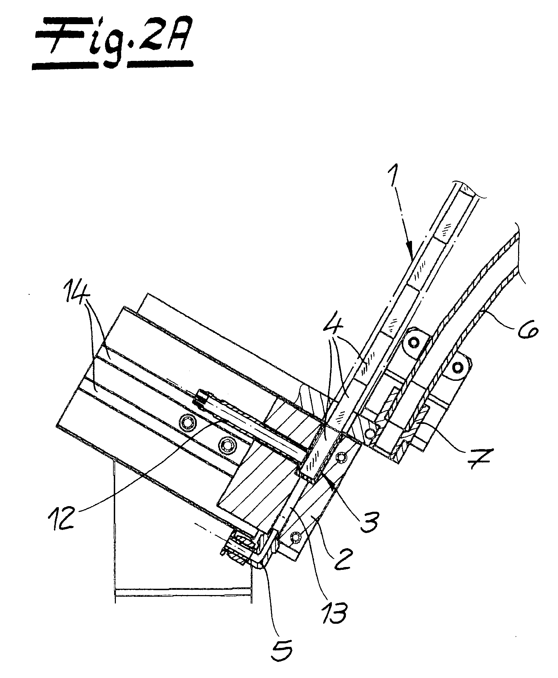

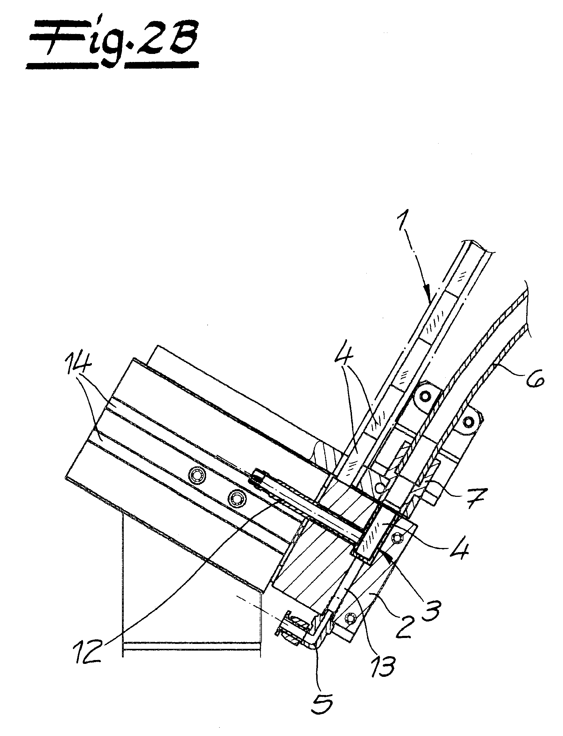

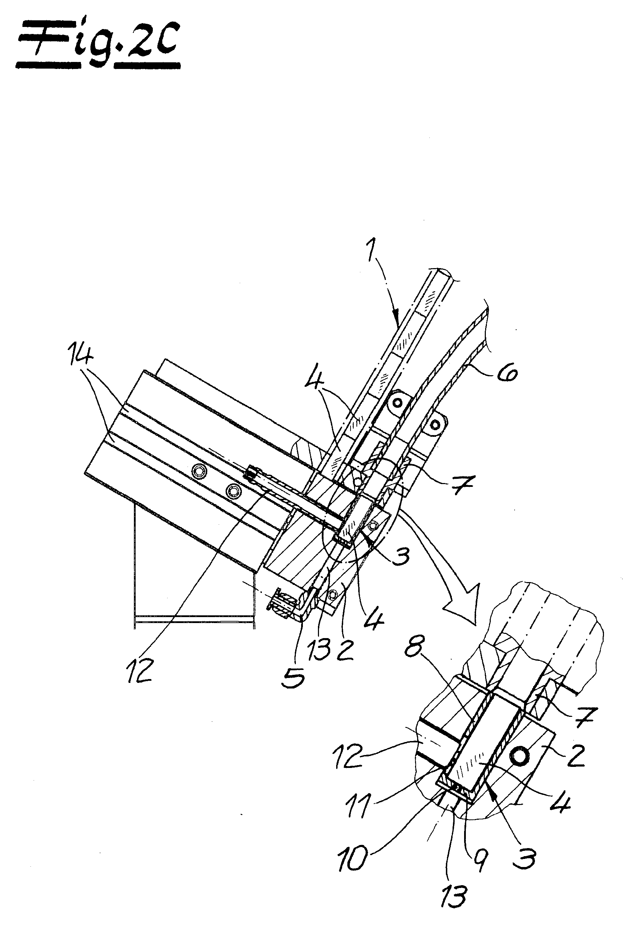

Der Träger 2 ist zwischen zwei Betriebspositionen verstellbar. In einer in den Fig. 1 und 2a dargestellten ersten Betriebsposition ist das Aufnahmeelement 3 an der Teile-Zuführung 1 positioniert. In einer zweiten Betriebsposition, die in den Fig. 2b und 2c dargestellt ist, fluchtet das Aufnahmeelement 3 mit der Förderleitung 6.

Das Aufnahmeelement 3 ist in Bewegungsrichtung des im Aufnahmeelement positionierten Teils 4 verschiebbar im Träger 2 angeordnet. Es liegt eine schwimmende Lagerung des Aufnahmeelementes 3 vor, wobei die schwimmende Lagerung eine einachsige Stellbewegung des Aufnahmeelementes 3 relativ zum Träger 2 ermöglicht.

Wenn sich der Träger 2 in der ersten Betriebsposition befindet (Fig. 2a) schließt das Aufnahmeelement 3 im Wesentlichen bündig mit der Außenfläche des Trägers ab. Dabei nimmt das Aufnahmeelement 3 die in Fig. 2a dargestellte Position aufgrund seines Eigenwichtes ein. Falls erforderlich, kann eine Rückstellfeder vorgesehen sein, die das Aufnahmeelement in der in Fig. 2a dargestellten Position hält, so lange das Aufnahmeelement nicht pneumatisch mit Druck beaufschlagt wird. In der zweiten Betriebsposition (Fig. 2c) liegt das Aufnahmeelement 3 unter der Wirkung eines an der Rückseite des Aufnahmeelementes pneumatisch erzeugten Drucks an einem Anschlussstück 7 der Förderleitung 6 an.

Das Aufnahmeelement 3 weist einen zylindrischen Mantel 8 und einen rückseitigen Boden 9 mit einer Durchlassöffnung 10 für Blasluft auf. Ferner enthält der Mantel 8 des Aufnahmeelementes 3 eine Öffnung 11, durch die Steuerluft zur Erzeugung einer Stellbewegung des Aufnahmeelementes 3 zuführbar ist. Die Steuerluft wird durch eine Steuerluftleitung 12 zugeführt.

Der Träger 2 ist als Platte ausgebildet, die eine Ausnehmung für das Aufnahmeelement 3 und eine an das rückseitige Ende der Ausnehmung anschließende sowie mit der Blasleitung 5 verbundene Bohrung 13 für Blasluft aufweist. Der Träger 2 ist linear beweglich auf einer Schlittenführung 14 geführt und an eine pneumatische Stellvorrichtung 15 angeschlossen.

Der Darstellung in Fig. 2c entnimmt man ferner, dass das Anschlussstück 7 der Förderleitung 6 eine ringförmige Sitzfläche aufweist, an der das in der zweiten Betriebsposition des Trägers vorstehende Ende des Aufnahmeelementes 3 anliegt. Die Teile-Zuführung 1 kann z. B. als rohrförmiger Kanal ausgebildet sein, durch den eine Folge von aneinander anliegenden Teilen 4 zuführbar ist.

Die erfindungsgemäße Vorrichtung arbeitet folgendermaßen. Der Träger 2 befindet sich zunächst in der in den Figuren 1 und 2a dargestellten ersten Betriebsposition. In dieser Betriebsposition gelangt eines der mittels der Teile-Zuführung 1 zugeführten Teile 4 durch Schwerkraft in das an der Teile-Zuführung bereitstehende Aufnahmeelement 3. Durch Betätigung der pneumatischen Stellvorrichtung 15 wird der Träger 2 danach in die in Fig. 2b dargestellte zweite Betriebsposition bewegt, wobei die in der Teile-Zuführung 1 nachfolgenden Teile 4 durch den plattenförmigen Träger 2, der die Teile-Zuführung 1 verschließt, zurückgehalten werden. Nachdem der Träger 2 die zweite Betriebsposition erreicht hat, wird das Aufnahmeelement 3 durch Zufuhr von Steuerluft und/oder durch Beaufschlagung mit Blasluft angehoben, bis das Aufnahmeelement 3 an dem Anschlussstück 7 der Förderleitung 6 anschlägt und in Umfangsrichtung dicht anliegt (Fig. 2c). In dieser zweiten Betriebsposition überbrückt das Aufnahmeelement 3 den funktions- und toleranzbedingten Spalts zwischen Träger 2 und Anschlussstück 7, so dass bei einem nachfolgenden Blasvorgang keine Luft nach außen entweichen kann. Sobald das Aufnahmeelement 3 die in Fig. 2c dargestellte Funktionsstellung einnimmt, kann durch die an den Träger 2 angeschlossene Blasleitung 5 Blasluft in einem für eine pneumatische Förderung ausreichenden Mengenstrom zugeführt und das Teil 4 aus dem Aufnahmeelement 3 ausgetragen und pneumatisch durch die Förderleitung 6 einer Montageanlage oder einer sonstigen Einrichtung zur Weiterverarbeitung oder Bearbeitung des Teils zugeführt werden. Anschließend wird die Blasluft abgeschaltet. Das Aufnahmeelement 3 fällt durch sein Eigengewicht zurück in die in Fig. 2b dargestellte Funktionsstellung, wobei die Rückstellung gegebenenfalls auch durch eine Rückstellfeder unterstützt werden kann. Durch Betätigung der pneumatischen Stellvorrichtung 15 wird der Träger 2 in die in Fig. 2a dargestellte Betriebsstellung zurückbewegt. Damit steht das Aufnahmeelement 3 für die erneute Aufnahme eines Teiles 4 bereit und kann der beschriebene Vorgang wiederholt werden.

## Patentansprüche

1. Vorrichtung zum Vereinzeln von Teilen, insbesondere von Teilen, die einer Montageanlage zugeführt werden, mit
einer Teile-Zuführung (1),
einem Träger (2) mit einem Aufnahmeelement (3) für ein mittels der Teile-Zuführung zugeführten Teils (4),
einer an den Träger (2) angeschlossenen Blasleitung (5) für die Zuführung von Blasluft zum Aufnahmeelement (3) und
einer Förderleitung (6) für eine pneumatische Förderung eines mit Blasluft aus dem Aufnahmeelement (3) ausgetragenen Teils (4),
wobei der Träger (2) zwischen einer ersten Betriebsposition, in der das Aufnahmeelement (3) an der Teile-Zuführung (1) bereitsteht, und einer zweiten Betriebsposition, in der das Aufnahmeelement (3) mit der Förderleitung (6) fluchtet, verstellbar ist und wobei das Aufnahmeelement (3) in Bewegungsrichtung des im Aufnahmeelement (3) positionierten Teils (4) verschiebbar im Träger (2) angeordnet ist und in der zweiten Betriebsposition unter der Wirkung eines an der Rückseite des Aufnahmeelements (3) pneumatisch erzeugten Drucks an einem Anschlussstück (7) der Förderleitung (6) anliegt.

2. Vorrichtung nach Anspruch 1, **dadurch gekennzeichnet, dass** das Aufnahmeelement (3) im Wesentlichen bündig mit der Außenfläche des Trägers (2) abschließt, wenn sich der Träger (2) in der ersten Betriebsposition befindet.

3. Vorrichtung nach Anspruch 2, **dadurch gekennzeichnet, dass** das Aufnahmeelement (3) aufgrund seines Eigengewichts oder unter der Wirkung einer Rückstellfeder eine Funktionsstellung einnimmt, in der das Aufnahmeelement (3) im Wesentlichen bündig mit der Außenfläche des Trägers (2) abschließt.

4. Vorrichtung nach einem der Ansprüche 1 bis 3, **dadurch gekennzeichnet, dass** das Aufnahmeelement (3) einen Mantel (8) und einen rückseitigen Boden (9) mit einer Durchlassöffnung (10) für Blasluft aufweist.

5. Vorrichtung nach Anspruch 4, **dadurch gekennzeichnet, dass** der Mantel (8) des Aufnahmeelements (3) eine Öffnung (11) aufweist, durch die Steuerluft zur Erzeugung einer Stellbewegung des Aufnahmeelementes (3) zuführbar ist.

6. Vorrichtung nach einem der Ansprüche 1 bis 5, **dadurch gekennzeichnet, dass** der Träger (2) als Platte ausgebildet ist, die eine Ausnehmung für das Aufnahmeelement (3) und eine an das rückwärtige Ende der Ausnehmung anschließende sowie mit der Blasleitung (5) verbundene Bohrung (13) für Blasluft aufweist.

7. Vorrichtung nach einem der Ansprüche 1 bis 6, **dadurch gekennzeichnet, dass** der Träger (2) auf einer Schlittenführung (14) linear beweglich geführt und an eine pneumatische Stellvorrichtung (15) angeschlossen ist.

8. Vorrichtung nach einem der Ansprüche 1 bis 7, **dadurch gekennzeichnet, dass** das Anschlussstück (7) der Förderleitung (6) eine ringförmige Sitzfläche aufweist, an der das in der zweiten Betriebsposition des Trägers vorstehende Ende des Aufnahmeelementes (3) anliegt.

9. Vorrichtung nach einem der Ansprüche 1 bis 8, **dadurch gekennzeichnet, dass** die Teile-Zuführung (1) einen rohrförmigen Kanal aufweist, durch den eine Folge von aneinander anliegenden Teilen (4) zuführbar ist.
